# EUROPEAN PATENT APPLICATION

(11) **EP 4 675 382 A1**
(43) Date of publication of application: **07.01.2026**
(21) Application number: 24186558.3
(22) Date of filing: 04.07.2024
(51) Int. Cl.: G05B 23/02

(54) **SYSTEM FOR ESTIMATING THE DEGRADATION STATE OF VEHICLE COMPONENTS**

(71) Applicant: KB Intellectual Property GmbH & Co. KG, 82049 Pullach (DE)
(72) Inventor: DUQUE VELEZ, Simon Felipe, 80809 München (DE); NEMETH, Huba, 80809 München (DE)

(57) **Abstract**

A cloud-based system (100) for estimating a degradation state of one or more components of a vehicle (10) is disclosed. The cloud-based system (100) comprises a data receiver (200) configured to be connected to the vehicle (10) to collect sensor data (110) from the vehicle (10), the sensor data (110) being associated to the one or more vehicle components (120); a classifier (300) configured to analyze the collected sensor data (110) and to determine an urgency label (353) indicating an urgency of a detailed analysis for at least one of vehicle component of the one or more vehicle components (120); and an execution device (400) configured to perform the detailed analysis for the at least one vehicle component (120) to determine the degradation state.

## Description

The present invention relates to a system for estimating the condition of a vehicle component, in particular, to a cloud-base system for scheduling the execution of degradation-estimation models based on triaging mechanism and expedited reaction to component degradation state of a commercial vehicle.

Predictive maintenance of machinery is a key topic in the context of manufacturing plants and other types of high value machinery. One of the main tasks for predictive maintenance is the calculation of the degradation state or degradation level of key components of the system.

There are some conventional methods known to overcome this problem and to schedule maintenance of the vehicle components.

For example, US2020201325A1 discloses a usage of a controller for analyzing the data streams for the sensors in the vehicle and, by means of calculating a current operating status of the vehicle based on driving events, determining if a prioritized processing is required. US2019066407A1 discloses an onboard diagnostics system used for analyzing the data streams of the vehicle and alerting the fleet's maintenance crew. US2023064656A1 discloses a system and method for facilitating predictive maintenance based on edge computing, data capture and processing of raw data, however, does not operate in cloud platforms.

For transmitting sensor data between a commercial vehicle and a remote machine, two schemes of data transmission are used:
- the first is nearly real-time data streaming, which is less widely used due to the limitations of over-the-air communication;
- the second, which is more common, is to transmit sensor data in collection of sensor signals over time, also called data batches.

These data batches are received by the remote machine, but they need to be processed first before they can be use by employing a mix of processes consisting of extraction, transformation, and loading. These processing routines are executed on a defined schedule each day.

The methods or models used for performing the inference of the degradation of the vehicle components vary according to the type of models selected for the task. Usually, those models require a high amount of computational power as well as a selection of signals over a defined time interval. Due to the requirement of computational power as well as the interval of data needed by many models for providing a reliable calculation of the degradation, this model execution is also scheduled on a tight daily schedule.

If an incident causes a sudden rise in the degradation level, the schedules of the two types of routines are unlikely to be executed on a favorable time, thus the cloud-based system may not be able to report the sudden rise of degradation in time. This delay might result in a breakdown of the vehicle before the fleet manager, external system or the driver can be warned.

The application of predictive maintenance to commercial vehicles is a new field. These models employ many data sequences and/or data batches, and due to the performance requirements that these models place onto the hardware on which they are hosted, they often require more computational power than is available in the vehicle.

To overcome this limitation, the calculation of the degradation state can be performed in a remote machine or cloud platform by transmitting over sensor readings in data batches.

The remote machines use data processing routines on a given schedule so that the received sensor data is usable by the models. Also, the degradation calculation models, and their execution are also scheduled to run over a period of time.

However, because the degradation calculation models require more computational power and because they require longer sequences of sensor data for the inference of degradation states, the degradation calculation models are executed less frequently.

At least some of these problems as described before are overcome by a cloud-based system according to claim 1 or a method according to claim 11. The dependent claims refer to further advantageous realizations of the subject matter of the independent claims.

The present invention relates to a cloud-based system for estimating a degradation state of one or more components (parts) of a vehicle. The cloud-based system comprises a data receiver configured to be connected to the vehicle to collect sensor data from the vehicle, the sensor data being associated to the one or more vehicle components. The cloud-based system further comprises a classifier, implemented as a triage component, configured to analyze the collected sensor data and to determine urgency label indicating an urgency of a detailed analysis for at least one vehicle component of the one or more vehicle components, and an execution device configured to perform the detailed analysis for the at least one vehicle component to determine the degradation state.

It is understood that the sensor data are in-vehicle raw sensor data (e.g., unprocessed data) or other data from the vehicle. Sensor data are captured from telematics components of the vehicle. The sensor data are queued in the data receiver. The sensor data are transmitted from the vehicle to a cloud platform via over-the-air communication. It is understood that the over-the-air communication is a wireless transmission of information (e.g., sensor data).

Optionally, the sensor data include sensor data batches. For example, the sensor data may be grouped together in sensor data batches. The sensor data batches, of varying sizes, can be time-wise contiguous sensor readings from the vehicle.

Optionally, the classifier may be configured to execute a triage model on the sensor data batches, to assign the urgency label to the result of the triage model based on the severity of the degradation of the vehicle components. The assigned urgency label may be one of the following: a high degradation state, a low degradation state or a fuzzy state. It is understood that a fuzzy state may represent vagueness and imprecise information from which a state estimation can be made.

The execution device further comprising an orchestrator. The orchestrator may be configured to receive the urgency label and to cause an expedited execution of the degradation calculation models based on the urgency label.

The triage model may be a light-weight triage model to improve the reaction time. Running a less detailed model may provide a rough state estimate of a high degradation state and use less computation to prioritize (e.g., urgent maintenance required) the high degradation state to one or more vehicle components.

Optionally, the orchestrator is configured to control a timing of at least one of the following:
- executions of the classifier based on a pre-set timing,
- executions of the execution device based on a pre-set timing,
- dependent on the urgency label, to change the pre-set timing for the expedited execution.

Optionally, the collected sensor data may include raw sensor data. Optionally, the cloud-based system may further comprise a data ingestor. The data ingestor may comprise at least one of the following: a sensor data extracting device from the raw sensor data, a sensor data loading device, and a sensor data transforming device. Thus, the data ingestor may be a data pre-processor or a device for data pre-processing. This routine is called data ingestion and is also commonly referred to as ETL/ELT (Extract, Transfer & Load Data) or Data Pipeline.

Optionally, the data ingestor may be configured to receive the raw sensor data from the data receiver and to perform at least one of the following:
- to pre-process on the raw sensor data,
- to associate the raw sensor data to separate vehicle components,
- to transform the raw sensor data into sensor data batches, wherein the sensor data batches are time-wise contiguous sensor readings from the vehicle,
- to forward the sensor data batches to the classifier.

The operation of the data ingestor may be based on a pre-set timing.

It is understood that the sensor data may arrive from different vehicles across the fleet. The pre-processing on the in-vehicle sensor data may include unpacking the sensor data. The timing of the ingestion may be performed when enough bandwidth and/or signal strength is available. The timing of the ingestion may also be performed when data rate sufficient.

Optionally, the execution device may further comprise a reporting device. Optionally, the reporting device may be configured to report the degradation state of the one or more vehicle components to at least one of the following: a driver of the vehicle, a fleet manager, an external system.

Optionally, the data ingestor may be configured to forward the sensor data batches to a data storage. Optionally, the data storage can be part of a Data Pipeline.

The degradation calculation models may be executed based on a pre-set timing (e.g., based on a tight daily schedule). The execution device may be adapted to forward the degradation state of the vehicle components to the data storage.

Within the present disclosure an orchestrator can be understood as a device able to coordinate or to manage or the timing of computer systems, applications or services (e.g. as part of or provided by the cloud platform or a cloud-based system).

Optionally, the orchestrator may be further configured to execute any of the following:
- a timing of an operation of the data ingestor,
- a timing of an operation of the reporting device.

Optionally, the cloud-based system may further comprise a data storage. The data storage may be configured to store one or more of:
- the sensor data batches for later execution in the execution device,
- the degradation state of the vehicle components,
- the urgency label.

Embodiments relates also to a vehicle management device for a commercial vehicle configured to collect raw sensor data associated to the one or more vehicle components. The vehicle management device comprises a telematics component configured to connect to a cloud-based system for estimating a degradation state of the one or more vehicle components.

Optionally, the telematics component of the vehicle management device may be configured to provide collected raw sensor data, or to perform a pre-processing on the collected raw sensor data and to provide sensor data batches to the cloud-based system.

It is understood that the vehicle management device is located on the commercial vehicle and is configured to communicate with the telematics component of the truck and with the telematics component of the trailer. It is understood that the telematics component is connected to a cloud-based system via an over-the air communication.

Optionally, the telematics component may be configured to pre-process the sensor data by performing one or more of the following:
- to associate the sensor data to separate vehicle components,
- to transform the sensor data into sensor data batches, wherein the sensor data batches are time-wise contiguous sensor readings from the vehicle.

Embodiments are suitable in particular for road vehicles and trailer combinations, which are predominantly commercial vehicles (trucks, towing vehicles) and trailers (towed vehicles), but may also include small trailers and caravans, which may be towed by passenger cars and light vans, or for example articulated commercial vehicles comprising tractors and semi-trailers.

Embodiments relates also to a computer-implemented method of using a cloud-based system for estimating degradation state of component(s)/part(s) of a vehicle. The method comprises the steps of:
- collecting sensor data from the vehicle with a data receiver, the sensor data being associated to one or more vehicle components;
- analyzing the collected sensor data with a classifier to determine an urgency label indicating an urgency of a detailed analysis for at least one vehicle component of the one or more vehicle components;
- performing the detailed analysis for the at least one vehicle component with an execution device to determine the degradation state.

Embodiments relates also a computer program product with a non-volatile memory to store software code configured to cause a processing unit or a control unit, when installed thereon, to carry out the method for estimating degradation state of one or more components of a vehicle.

Embodiments solve at least some of the above-mentioned problems by cloud-based system by using an orchestrator to synchronize the operation of the components of the cloud-based system and schedule operations most efficiently.

Some examples of the systems and/or methods will be described in the following by way of examples only, and with respect to the accompanying figures, in which:
- Fig. 1: depicts a cloud-based system for estimating a degradation state of one or more components of a vehicle according to an embodiment of the present invention;
- Fig. 2: depicts an embodiment of the vehicle management device;
- Fig.3: depicts another embodiment of the cloud-based system;

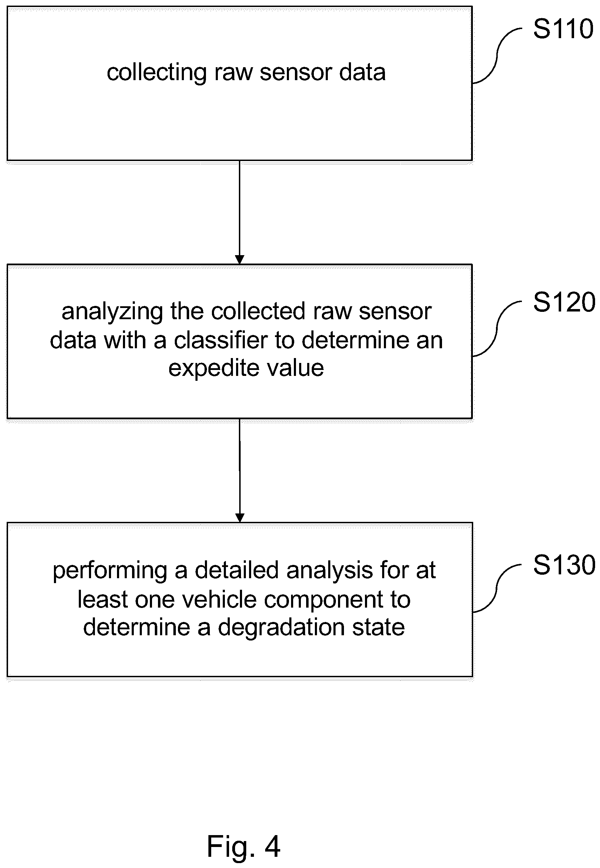

- Fig. 4: depicts a flow diagram of a method for estimating degradation state of one or more components of a vehicle according to an embodiment of the present invention.

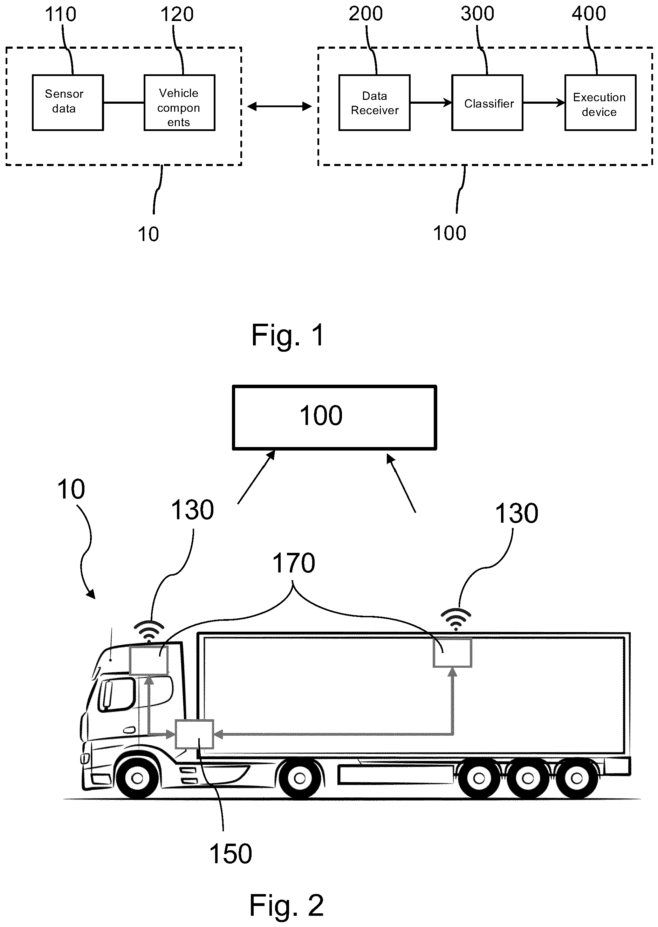

**Fig. 1** depicts a high-level data chain between vehicle 10 and cloud platform (e.g., cloud-base system) 100. The in-vehicle sensor data 110 required by the calculation model is captured by telematics components (e.g., data capture device) installed in the commercial vehicle 10. The sensor data 110 are sent over in data batches of varying size by means of over-the-air communication 130 to a data receiver 200. The size of the raw sensor data 110 varies according to manufacturer, in accordance with the capabilities of the data capture device and the availability of signal strength that is necessary to transmit the raw sensor data 110 (e.g., in data batches) over to the cloud platform 100. Then, a classifier 300 analyzes the collected raw sensor data 110 and determine an urgency label. The urgency label indicating an urgency of a detailed analysis for at least one vehicle component of the one or more vehicle components 120. Then, an execution device 400 is configured to perform the detailed analysis for the at least one vehicle component 120 to determine the degradation state.

**Fig. 2** shows an embodiment of the vehicle management device 150. The vehicle management device 150 is located on the commercial vehicle 10 and is configured to communicate with the telematics component 170 of the truck and with the telematics component 170 of the trailer. The telematics component 170 is connected to a cloud-based system 100 via an over-the air communication 130. The over-the air communication 130 transfers data wirelessly from the vehicle 10 to the cloud platform 100 and vice versa.

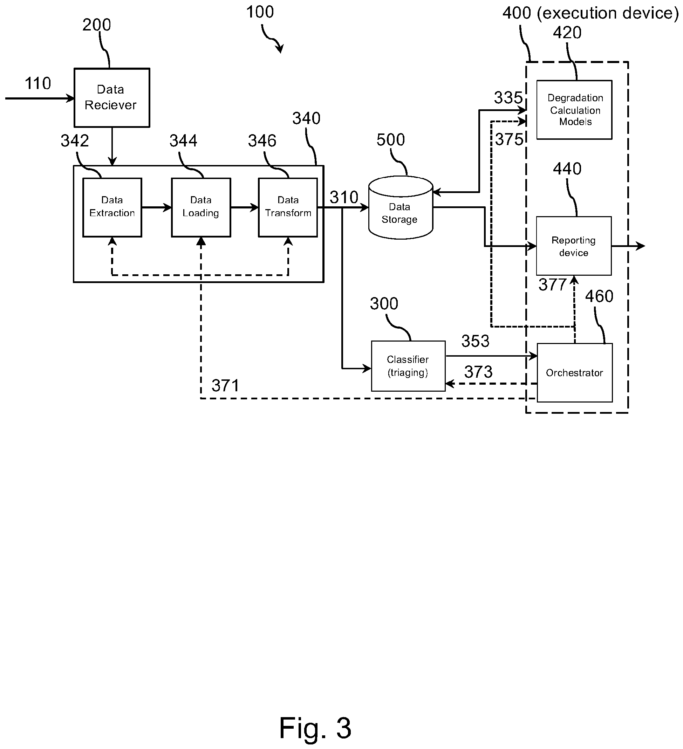

Fig. 3 shows another embodiment of the cloud-based system 100. For enabling the inference of the degradation states of the components of the commercial vehicle 10, the first step is ingesting and preparing the data that the inference models require as an input by using a data ingestor 340.

Further, embodiments disclose a solution in which a lightweight, low granularity model (means for triaging 300) of the components of the commercial vehicles 10 that are monitored by the cloud-based system 100.

This rough estimation of the degradation state is executed by a classifier 300. The classifier 300 (e.g., means for triaging) is used as a triage mechanism for scheduling the execution of degradation-estimation models (e.g., degradation calculation models 420). The degradation calculation models 420 have higher execution requirements which are only ran on a tight schedule.

It is understood that triage is the process of assessing the priority of the evaluation of a component based on a low-granularity evaluation of the severity of its degradation. The calculation of this triaging state can be performed as a step of the data processing routine.

The classifier 300 is configured to execute the triage model on the sensor data batches 310 to assign the urgency label 353 to the result of the triage model based on a severity of the degradation of the vehicle components 120. The assigned urgency label 353 being one of the following: a high degradation state, a low degradation state or a fuzzy state.

If the triaging component detects a likely high degradation state, the execution of those higher-detailed models can be expedited and performed as soon as possible focused on a limited number of vehicles 10. This enables a faster reaction speed to sudden degradation while maintaining the scheduling of the modelling routines.

In this process, the key data processing capabilities are implemented and supported by the cloud-base system 100, as visualized in more detail in **Fig. 3****.** Upon receival in the cloud platform 100, the raw sensor data 110 are not directly ready to be used as input for inference purposes. The reasons for this are manifold:
- different models have varying data requirements, and at least a selection and transformation routine is required;
- raw sensor data 110 needs to be unpacked and transformed to meet the varying interface requirements of the inference models stored in the execution device 400.

These routines comprise a combination of data Extraction, Loading and Transformation performed one after the other using the data ingestor 340. Therefore, the data ingestor 340 comprising a sensor data extracting device 342, a sensor data loading device 344, and a sensor data transforming device 346. This routine is called Data Ingestion and is also commonly referred to ETL/ELT or Data Pipeline. These data batches may also arrive from different vehicles 10 across the fleet.

As the raw sensor data 110 is received continuously while the fleet operates, the execution of the data ingestor 340 (e.g., Data Pipelines) is performed on a set schedule during the day. While this process is not running, the data batches of the sensor data 110 are queued in the data receiver 200, incurring in an inherent processing time delay (Tₑₗₜ). The timing of the operation 371 of the data ingestor 340 is controlled by a cloud platform 100 component called the orchestrator 460.

The orchestrator 460 is configured to receive the urgency label 353 and to cause an expedited execution of a degradation calculation model 420 based on the urgency label 353.

In addition, the orchestrator 460 is configured to control a timing of at least one of the following:
- executions 373 of the classifier based on a pre-set timing,
- executions 375 of the execution device based on a pre-set timing,
- dependent on the urgency label, to change the pre-set timing for the expedited execution.

After the in-vehicle sensor data 110 are received, processed, transformed into sensor data batches 310 via the data ingestor 340 (e.g., Data Pipelines), the sensor data batches 310 are properly stored on the data storage 500 in the cloud-based system 100 (e.g., cloud platform). The next step is executing the degradation calculation models 420 stored on the execution device 400 that estimate the degradation state of the vehicle components 110 employing the processed sensor data batches 310 as input.

Nevertheless, it should be emphasized that that these degradation calculation models 420 stored on the execution device 400 are not executed neither continuously nor on demand.

The degradation calculation models 420 stored on the execution device 400 are run on a tight schedule due to the following factors:
- First, the degradation calculation models 420 are describing typically a slow changing phenomena;
- second, degradation calculation models 420 also tend to require high amounts of resources such as the usage of GPU computational resources and inference time.

The above identified factors limit the execution of the degradation calculation models 420 to only a few times per day. This schedule can be tuned according to resource usage settings, and it is also managed by the orchestrator 460. This also implies that to calculate the degradation state of one or more vehicle components 120, there is an additional time delay incurred by the scheduling of the inference (T_{infer}).

Lastly, the results of the calculation of the component degradation (e.g., an expedited reaction to the degradation state of the one or more vehicle components 120) need to be delivered, by means of a reporting device 440, from the cloud platform 100 to the fleet or the vehicle's owner so that a breakdown can be prevented.

This scheduling (e.g., timing 377 of the operation of the reporting device 440) is also handled by the orchestrator 460 and has an inherent delay (Tᵣₑₚₒᵣₜ). In this manner, the reaction to a sudden increase in degradation in a vehicle component 120 is Tₜₒₜₐₗ = Tₑₗₜ + T_{infer} + Tᵣₑₚₒᵣₜ. This time delay is variable, potentially resulting in an inadequate response time in certain situations.

With the intention of minimizing the reaction delay at a lower computational effort, the present embodiments employ a light-weight triage model stored means for triaging 300 (e.g. classifier) as a component of the cloud platform 100 to be executed during the Data Ingestion phase 340. That is, as a part of the data ingestor 340 (e.g., Data Pipelines) and scheduled by the orchestrator 460. The role of the adaptive triage model is to perform a triage of the rough state of the vehicle components 120. By adaptive triaging, it is understood the process of assessing the priority (e.g., an urgency label 353) of the evaluation of a vehicle component 120 based on a low-granularity evaluation of the severity of the degradation of one or more vehicle components 120.

In order to fulfil this role while keeping the requirement of being lightweight enough to be executed as a part of the data ingestor 340 (e.g., Data Pipeline), the goal of the classifier 300 using the triage model is rather to classify the sensor data batches 310 between suspected high degradation or low degradation or a similar fuzzy state together with a confidence level.

These two outputs are then used by the classifier 300 (e.g., means for triaging) itself for determining whether the calculation of the high-granularity degradation state should be done as soon as possible for a given vehicle component 120 of the commercial vehicle 10 in question.

In the cloud platform 100 then, according to the output data 353 (e.g., urgency label) of the classifier 300, the orchestrator 460 is thus informed about the vehicle components 120 and vehicles 10 that need an expedited calculation. The orchestrator 460 timing operation 375 of the degradation calculation models 420 so that the execution of these models is requested to be performed with a limited number of inputs within the next minutes (T_{expedit}) and in this manner, reducing the inference delay (T_{infer}) and reducing the reaction delay of the entire system.

Additionally, after the degradation state has been calculated for the given vehicle components 120 in the given vehicle 10 and the results of the classifier 300 have been either confirmed or discarded, the reporting delay (Tᵣₑₚₒᵣₜ) can be reduced further by expediting the delivery of the results (e.g., an expedited reaction to the degradation state of the vehicle components 120) to the fleet, external device or vehicle owner.

This is achieved by requesting to the orchestrator 460 by timing 377 of the operation of the reporting device 440. The orchestrator 460 is sending the output data that the visualization and reporting routines shall be updated and executed by timing of the operation 377 of the reporting device 440 within a minimal amount of time after the degradation calculation values are calculated by the high-fidelity models 420 and sent to the data storage 500.

**Fig. 3** depicts a flow diagram of a computer-implemented method of using a cloud-based system 100 for estimating degradation state of one or more components of a vehicle 10. The diagram shows the steps of:
- collecting S110 sensor data 110 from the vehicle 10 with a data receiver 200, the raw sensor data 110 being associated to one or more vehicle components 120;
- analyzing S120 the collected sensor data 100 with a classifier 300 to determine an urgency label 353 indicating an urgency of a detailed analysis for at least one vehicle component of the one or more vehicle components 120;
- performing S130 the detailed analysis for the at least one vehicle component 120 with an execution device 400 to determine the degradation state.

The description and drawings merely illustrate the principles of the disclosure. It will thus be appreciated that those skilled in the art will be able to devise various arrangements that, although not explicitly described or shown herein, embody the principles of the disclosure and are included within its scope.

Functions of various elements shown in the figures, including any functional blocks labeled such as "execution device", "means for triaging" etc., may be provided through the use of dedicated hardware, such as "a processor", "a controller", etc. as well as hardware capable of executing software in association with appropriate software. Moreover, any entity described herein as "device", may correspond to or be implemented as "one or more modules", "one or more devices", "one or more units", etc. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included.

It should be appreciated by those skilled in the art that any block diagrams herein represent conceptual views of illustrative circuitry embodying the principles of the disclosure. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Furthermore, the following claims are hereby incorporated into the Detailed Description, where each claim may stand on its own as a separate example. While each claim may stand on its own as a separate example, it is to be noted that - although a dependent claim may refer in the claims to a specific combination with one or more other claims - other examples may also include a combination of the dependent claim with the subject matter of each other dependent or independent claim. Such combinations are proposed herein unless it is stated that a specific combination is not intended. Furthermore, it is intended to include also features of a claim to any other independent claim even if this claim is not directly made dependent to the independent claim.

It is further to be noted that methods disclosed in the specification or in the claims may be implemented by a device having means for performing each of the respective acts of these methods. Further, it is to be understood that the disclosure of multiple acts or functions disclosed in the specification or claims may not be construed as to be within the specific order. Therefore, the disclosure of multiple acts or functions will not limit these to a particular order unless such acts or functions are not interchangeable for technical reasons. Furthermore, in some examples a single act may include or may be broken into multiple sub acts. Such sub acts may be included and part of the disclosure of this single act unless explicitly excluded.

Furthermore, while each embodiment may stand on its own as a separate example, it is to be noted that in other embodiments the defined features can be combined differently, i.e. a particular feature descripted in one embodiment may also be realized in other embodiments. Such combinations are covered by the disclosure herein unless it is stated that a specific combination is not intended

Furthermore, while each embodiment may stand on its own as a separate example, it is to be noted that in other embodiments the defined features can be combined differently, i.e. a particular feature described in one embodiment may also be realized in other embodiments. Such combinations are covered by the disclosure herein unless it is stated that a specific combination is not intended.

### LIST OF REFERENCE SIGNS

- 10: vehicle
- 100: cloud-base system
- 110: sensor data (e.g., in-vehicle sensor data, raw sensor data)120 vehicle components
- 130: over-the-air communication (wireless data transfer)
- 150: vehicle management device
- 170: telematics component
- 200: data receiver
- 300: classifier (e.g. means for triaging)
- 310: sensor data batches
- 340: data ingestor (data pipeline)
- 342: sensor data extracting device
- 344: sensor data loading device
- 346: sensor data transforming device
- 353: urgency label
- 371: timing of the operation of the data ingestor
- 373: executions of the classifier based on a pre-set timing
- 375: executions of the execution device
- 377: timing of the operation of the reporting device
- 400: execution device
- 420: degradation calculation models
- 440: reporting device
- 460: orchestrator
- 500: data storage

## Claims

1. A cloud-based system (100) for estimating a degradation state of one or more components of a vehicle (10),
**characterized by:**
- a data receiver (200) configured to be connected to the vehicle (10) to collect sensor data (110) from the vehicle (10), the sensor data (110) being associated to the one or more vehicle components (120);
- a classifier (300) configured to analyze the collected sensor data (110) and to determine an urgency label (353) indicating an urgency of a detailed analysis for at least one of vehicle component of the one or more vehicle components (120); and
- an execution device (400) configured to perform the detailed analysis for the at least one vehicle component (120) to determine the degradation state.

2. The cloud-based system (100) as claimed in claim 1, wherein the sensor data include sensor data batches (310), the sensor data batches (310) being time-wise contiguous sensor readings from the vehicle (10),
and wherein the classifier (300) is configured to execute a triage model on the sensor data batches (310) to assign the urgency label (353) to the result of the triage model based on a severity of the degradation of the vehicle components (120), the assigned urgency label (353) being one of the following: a high degradation state, a low degradation state or a fuzzy state,
the execution device (400) further comprising an orchestrator (460), the orchestrator (460) being configured to receive the urgency label (353) and to cause an expedited execution of a degradation calculation model (420) based on the urgency label (353).

3. The cloud-based system (100) of claim 2, wherein the orchestrator (460) is configured to control a timing of at least one of the following:
- executions (373) of the classifier (300) based on a pre-set timing,
- executions (375) of the execution device (400) based on a pre-set timing,
- dependent on the urgency label (353), to change the pre-set timing for the expedited execution.

4. The cloud-based system (100) as claimed in any one of the preceding claims, wherein the collected sensor data include raw sensor data, the system further comprising:
a data ingestor (340) comprising at least one of the following: a sensor data extracting device (342) from the raw sensor data, a sensor data loading device (344), and a sensor data transforming device (346), the data ingestor (340) being configured to receive the raw sensor data (110) from the data receiver (200) and to perform at least one of the following:
- to pre-process on the raw sensor data (110),
- to associate the raw sensor data (110) to separate vehicle components (120),
- to transform the raw sensor data (110) into sensor data batches (310), wherein the sensor data batches (310) are time-wise contiguous sensor readings from the vehicle (10),
- to forward the sensor data batches (310) to the classifier (300).

5. The cloud-based system (100) as claimed in any one of the preceding claims, wherein the execution device (400) further comprises a reporting device (440), the reporting device (440) is configured to report the degradation state of the one or more vehicle components (120) to at least one of the following: a driver of the vehicle (10), a fleet manager, an external system.

6. The cloud-based system (100) as claimed claim 4 or claim 5, wherein the orchestrator (460) is further configured to control at least one of the following:
- a timing (371) of an operation of the data ingestor (340),
- a timing (377) of an operation of the reporting device (440).

7. The cloud-based system (100) as claimed in any one of claims 2 to 6, further comprising a data storage (500) configured to store one or more of:
- the sensor data batches (310) for later execution in the execution device (400),
- the degradation state of the vehicle components (120),
- the urgency label (353).

8. A vehicle management device (150) for a commercial vehicle (10) configured to collect raw sensor data (110) associated to the one or more vehicle components (120), **characterized by**
a telematics component (170) configured to connect to a cloud-based system (100) according to any one of claims 1 to 7 for estimating a degradation state of the one or more vehicle components (120).

9. The vehicle management device (150) of claim 8, wherein the telematics component (170) is configured to provide collected raw sensor data (110), or to perform a pre-processing on the collected raw sensor data (110) and to provide sensor data batches (310) to the cloud-based system (100).

10. The vehicle management device (150) of claim 8, wherein the telematics component (170) is configured to pre-process the sensor data (110) by performing one or more of the following:
- to associate the sensor data (110) to separate vehicle components (120),
- to transform the sensor data (110) into sensor data batches (310), wherein the sensor data batches (310) are time-wise contiguous sensor readings from the vehicle (10).

11. A computer-implemented method of using a cloud-based system (100) for estimating degradation state of one or more components of a vehicle (10), **characterized by:**
- collecting (S110) sensor data (110) from the vehicle (10) with a data receiver (200), the sensor data (110) being associated to the one or more vehicle components (120);
- analyzing (S120) the collected sensor data (100) with a classifier (300) to determine an urgency label (353) indicating an urgency of a detailed analysis for at least one vehicle component of the one or more vehicle components (120);
- performing (S130) the detailed analysis for the at least one vehicle component (120) with an execution device (400) to determine the degradation state.

12. A computer program product with a non-volatile memory to store software code configured to cause a processing unit or a control unit, when installed thereon, to carry out the method of claim 11.
